# EUROPÄISCHE PATENTSCHRIFT

(11) **EP 3 317 061 B1**
(45) Veröffentlichungstag und Bekanntmachung des Hinweises auf die Patenterteilung: **06.05.2020**
(21) Anmeldenummer: 16740945.7
(22) Anmeldetag: 24.06.2016
(51) Int. Cl.: B29B 7/40, B29B 7/72, B29B 7/74, B29B 7/76, B29B 7/86, C08G 18/42, C08G 18/48, C08G 18/73, C08G 18/74, B29K 105/04, B29K 105/24, C08G 101/00, C08J 9/30

(54) **MISCHVORRICHTUNG MIT EINER DRUCKHALTEVORRICHTUNG, UND DARAUF BEZOGENES VERFAHREN**
MIXING DEVICE WITH A PRESSURE HOLDING DEVICE, AND RELATED METHOD
DISPOSITIF MÉLANGEUR POURVU D'UN DISPOSITIF DE MAINTIEN DE PRESSION, ET PROCÉDÉ ASSOCIÉ

(30) Priorität: 03.07.2015 AT 4372015
(43) Veröffentlichungstag der Anmeldung: 09.05.2018
(73) Patentinhaber: Henkel AG & Co. KGaA, 40589 Düsseldorf (DE)
(72) Erfinder: SCHWABL, Christian, 6900 Bregenz (AT); BALDAUF, Günther, 6914 Hohenweiler (AT); METZLER, Mario, 6890 Lustenau (AT)
(74) Vertreter: Torggler & Hofinger Patentanwälte
(86) Internationale Anmeldenummer: PCT/AT2016/050234
(87) Internationale Veröffentlichungsnummer: WO 2017/004641

(56) Entgegenhaltungen:
- EP-A1- 0 776 745
- WO-A1-92/14595
- DE-A1- 1 504 654
- DE-A1- 2 125 679
- DE-A1- 2 419 961
- DE-A1- 19 848 357
- DE-A1-102011 009 034
- DE-A1-102012 002 047
- US-A- 5 902 042

## Beschreibung

Die vorliegende Erfindung betrifft eine Mischvorrichtung mit den Merkmalen des Oberbegriffs des Anspruchs 1 und ein Verfahren zum Herstellen eines geschäumten Materials mit den Merkmalen des Oberbegriffs des Anspruchs 11.

Mit einem gattungsgemäßen Verfahren können unter Verwendung einer gattungsgemäßen Mischvorrichtung geschäumte Materialien hergestellt werden, die vielfältige Anwendungsmöglichkeiten haben. Beispielsweise handelt es sich bei den geschäumten Materialien um Dichtungen.

Mischvorrichtungen sind unter anderem in den Druckschriften DE 15 04 654 A1, US 5,902,042 A und DE 198 48 357 A1 offenbart.

Aus der DE 2 125 679 ist eine Vorrichtung zum Vermischen und Ausstoßen von flüssigen, nach der Mischung schnell härtenden, Mehrkomponentenkunststoffen bekannt. Diese Vorrichtung weist eine Mischkammer mit darin befindlichem Rührer auf. Ein Auslassteil der Mischkammer ist gegenüber einem mittleren Teil der Mischkammer entgegen einer Rückstellkraft verschiebbar angeordnet. Durch Materialdruck im Inneren der Mischkammer oder durch gesonderte Ansteuerung wird das Auslassteil geöffnet, wonach der Rührer anläuft und das neu in die Mischkammer eintretende Kunststoffmaterial verrührt. Nach Beendigung eines Ausstoßvorganges soll die Mischkammer völlig mit Kunststoff gefüllt bleiben, um ein Lufteinrühren und somit das Vermischen des Kunststoffmaterials mit Luft zu verhindern, da dies die Qualität der zu erzeugenden Kunststoffteile nachteilig beeinflussen würde.

Aus der EP 776 745 A1 ist ein Verfahren bekannt geworden, bei welchem eine viskose Flüssigkeit mit Gas vorgemischt und anschließend in einer Mischvorrichtung mit einem Härtungsmittel gemischt wird (vgl. Fig. 7 dieser Schrift). Problematisch ist daran, dass es in der Mischvorrichtung zu einem Ausgasen des Gases aus der viskosen Flüssigkeit kommen kann, sodass die Mischung der mit Gas gemischten viskosen Flüssigkeit und dem Härtungsmittel nach der Expansion nicht die gewünschten Eigenschaften aufweisen bzw. auch die Expansion selbst beeinträchtigt sein kann.

Aus der DE 1 779 667 A ist eine Mischvorrichtung bekannt, bei welcher ein Rührer zweiteilig ausgebildet ist, wobei die beiden Teile durch eine Feder zueinander vorgespannt sind, sodass bei Überschreiten eines in der Mischvorrichtung herrschenden Druckes die Feder komprimiert wird und die Ausbringöffnung geöffnet wird. Hierdurch soll ein Nachtropfen verhindert werden. Es ist nicht sichergestellt, dass der Druck in der Mischvorrichtung stets über einem Wert bleibt, bei dem das Ausschäumen des Gases in der Mischvorrichtung zuverlässig verhindert wird.

Aufgabe der Erfindung ist die Bereitstellung einer Mischvorrichtung und eines Verfahrens, bei welchen die oben beschriebenen Probleme vermieden werden.

Diese Aufgabe wird durch eine Mischvorrichtung mit den Merkmalen des Anspruchs 1 und ein Verfahren mit den Merkmalen des Anspruchs 11 gelöst.

Durch die Druckhaltevorrichtung ist es möglich, in der Mischvorrichtung einen solchen Druck vorzugeben, dass ein Ausgasen des Gases aus der wenigstens einen Flüssigkeit und/oder aus dem zumindest einen flüssigen Härtungs- oder Vernetzungsmittel bzw. aus der Mischung aus Flüssigkeit und Härtungs- oder Vernetzungsmittel verhindert wird. Jener vorgebbare Druck, bei welchem ein Entgasen des Gases aus der wenigstens einen Flüssigkeit und/oder aus dem flüssigen Härtungs- oder Vernetzungsmittel vermieden wird, kann dabei durch Versuche ermittelt werden.

Vorteilhafte Ausführungsformen der Erfindung sind in den abhängigen Ansprüchen definiert.

Bei der wenigstens einen Flüssigkeit kann es sich vorzugsweise um eine viskose Flüssigkeit handeln. Beispiele für die wenigstens eine Flüssigkeit sind Polyole, Silikone, Epoxy, Polyester, Acrylate und MS-Polymere.

Beispiele für das Gas, mit dem die Flüssigkeit und/oder das flüssige Härtungs- oder Vernetzungsmittel vermischt ist bzw. sind, sind Luft, Stickstoff, Kohlendioxid.

Ein Beispiel für das Härtungsmittel ist Isocyanat.

Beispiele für das Vernetzungsmittel sind Silikone.

Weitere Beispiele für Systeme mit wenigstens 2 Komponenten sind:
- additionsvernetzendes Silikon mit Silikon als Flüssigkeit und Silikon als additionsvernetzendes Vernetzungsmittel
- kondensationsvernetztes Silikon z. B. mit Wasser und/oder Glykolen, oder gemäß der DE 10 2008 011 986 A1 mit Silikon als viskoser Flüssigkeit und Wasser und/oder Glykolen als kondensationsvernetzendes Vernetzungsmittel
- Polyurethan (Ergebnis) mit Isocyanat als Härtungsmittel vernetzt. Die Polyolkomponente als Flüssigkeit kann z. B. Polyesterpolyole, Polyetherpolyole, Thiole, Glykole, Amine, Kettenverlängerer und Acrylate enthalten. Die Isocyanate können aromatisch (z.B. auf Basis MDI, TDI) sowie aliphatisch (z.B. auf Basis HDI, IPDI, 12 fach hydriertes MDI) sein.
- Polyisocyanorate, die zweite Komponente enthält die Trimerisierungskatalysatoren und ggf. noch Polyole, andere Substanzen mit aktivem Wasserstoff oder nicht reaktive Verdünner.
- 1K NCO terminierte Polyurethane mit Wasser und/oder Glykolen als Härtungs- oder Vernetzungsmittel (Boostersysteme)
- Epoxidharzsysteme
- Silanmodifizierte Polymere mit Wasser und/oder Glykolen in der B Komponente , z.B. MS Polymere
- Acrylate, radikalisch gehärtet
- ungesättige Polyesterharze, radikalisch gehärtet
- Vinylesterharze, radikalisch gehärtet

Der durch die Druckhaltevorrichtung vorgebbare Druck kann im einfachsten Fall durch eine im Bereich der Ausbringöffnung angeordnete Blende oder ein den zugänglichen Bereich der Ausbringöffnung auf einen Spalt begrenzendes festes Gegenmittel erzeugt werden. Die für einen gewünschten Druck erforderliche Dimensionierung der Blende oder des Spaltes kann durch Versuche oder Berechnungen festgestellt werden.

Bevorzugt ist vorgesehen, dass der durch die Druckhaltevorrichtung vorgebbare Druck mittels einer Einstellvorrichtung veränderbar, vorzugsweise in Stufen oder stufenlos einstellbar, ist. Hierdurch kann auf unterschiedliche Mengen von mit der Flüssigkeit und/oder dem flüssigen Härtungs- oder Vernetzungsmittel vermischtem Gas und auf unterschiedliche Austragsmengen aus der Ausbringöffnung reagiert werden. Es kann aber auch ausreichen, die Druckhaltevorrichtung einmal auf einen bestimmten Druck einzustellen, der anschließend nicht mehr verändert wird.

Alternativ zur Veränderbarkeit über eine Einstellvorrichtung kann eine austauschbare Blende für die Ausbringöffnung mit unterschiedlichen Blendendurchmessern oder eine austauschbare, mit der Ausbringöffnung verbindbare Düse mit unterschiedlichen Längen und/oder Innendurchmessern vorgesehen sein.

Es ist erfindungsgemäss vorgesehen, dass die Druckhaltevorrichtung ein in der Mischvorrichtung relativ zur Ausbringöffnung verfahrbar angeordnetes Stellglied umfasst, durch welches ein zwischen dem Stellglied und der Ausbringöffnung verbleibender Spalt und damit der durch die Druckhaltevorrichtung erzeugte Druck einstellbar sind. Je nach Größe des Spaltes ist der Druck in der Mischvorrichtung unterschiedlich, wobei ein geringerer Spalt mit einem höheren Druck in der Mischvorrichtung verbunden ist. Hier wird die Druckhaltevorrichtung durch den zwischen dem Stellglied und der Ausbringöffnung gebildeten Spalt bei Einbringung von Material in die Mischvorrichtung gebildet.

Es ist erfindungsgemäss vorgesehen, dass die Mischvorrichtung einen Rührer zum Vermischen der wenigstens einen Flüssigkeit und des zumindest einen flüssigen Härtungs- oder Vernetzungsmittels aufweist; die Mischvorrichtung kann als dynamische Mischvorrichtung bezeichnet werden.

Es ist erfindungsgemäss vorgesehen, dass der Rührer selbst verfahrbar ausgebildet ist und das Stellglied bildet.

Es ist erfindungsgemäss vorgesehen, dass das verfahrbare Stellglied durch einen Kraftspeicher in Richtung der Ausbringöffnung vorgespannt ist. Hierdurch kann auf Schwankungen der Viskosität der Mischung aus Flüssigkeit und Härtungs- oder Vernetzungsmittel und Änderungen in der Ausbringmenge derart selbstständig reagiert werden, dass der Druck in der Mischvorrichtung im Wesentlichen konstant bleibt. Der Kraftspeicher kann als mechanische Feder, als Druckluftfeder, als hydraulische Kolben-Zylinder-Einheit, als das Stellglied durch die Schwerkraft belastende Zusatzmasse, als elektrischer Antrieb (z.B. Linearantrieb) oder dgl. ausgebildet sein.

Bevorzugt ist eine Vorrichtung zum Einstellen der Stärke des Kraftspeichers vorgesehen. Im Falle einer mechanischen Feder kann es sich zum Beispiel um einen verstellbaren Anschlag für die Feder handeln. Im Falle der Druckluftfeder oder der hydraulischen Kolben-Zylinder-Einheit ist der Druck unmittelbar einstellbar.

Im leeren Zustand der Mischvorrichtung ist der Kraftspeicher vorzugsweise so bemessen, dass die Ausbringöffnung durch das Stellglied verschlossen ist. Durch das in die Mischvorrichtung über die Zuführöffnungen eingebrachte Material wird das Stellglied gegen die Beaufschlagung des Kraftspeichers unter Ausbildung eines Spaltes von der Ausbringöffnung wegbewegt. Das Ausmaß der Bewegung weg von der Ausbringöffnung ist durch die Vorrichtung zum Einstellen der Stärke des Kraftspeichers einstellbar.

Bei nicht erfindungsgemäßen Mischvorrichtungen kann vorgesehen sein, dass die Ausbringöffnung relativ zu einem axial feststehenden Mittel, vorzugsweise einem Rührer, zur Einstellung des zwischen der Ausbringöffnung und dem axial feststehenden Mittel verbleibenden Spaltes verfahrbar ist. In diesem Fall umfasst die Druckhaltevorrichtung das axial feststehende Mittel und die relativ zum axial feststehenden Mittel verfahrbare Ausbringöffnung. Ist die Mischvorrichtung längserstreckt ausgebildet, kann es vorteilhaft sein, wenn die wenigstens eine Zuführöffnung für die wenigstens eine Flüssigkeit und die zumindest eine weitere Zuführöffnung für das zumindest eine flüssige Härtungs- oder Vernetzungsmittel an unterschiedlichen axialen Positionen der Mischvorrichtung angeordnet sind. Weil das Mischen der Flüssigkeit mit dem flüssigen Härtungs- oder Vernetzungsmittel erst im Bereich jener Zuführöffnung erfolgt, die näher bei der Ausbringöffnung liegt, kommt es im axial darüber liegenden Bereich zu keiner oder nur einer geringen Verschmutzung.

Es kann vorgesehen sein, dass die Ausbringöffnung der Mischvorrichtung mit einer Düse verbunden ist.

Es kann vorgesehen sein, dass das Gas in der Flüssigkeit und/oder in dem flüssigen Härtungs- oder Vernetzungsmittel zumindest teilweise gelöst vorliegt.

Schutz wird auch begehrt für eine Anordnung mit einer Mischvorrichtung nach wenigstens einem der vorangehenden Ausführungsbeispiele und einer Quelle für wenigstens eine Flüssigkeit, die mit der wenigstens einen Zuführöffnung für die wenigstens eine Flüssigkeit verbunden ist, und einer Quelle für zumindest ein flüssiges Härtungs- oder Vernetzungsmittel, die mit der zumindest einen weiteren Zuführöffnung für das zumindest ein flüssiges Härtungs- oder Vernetzungsmittel verbunden ist, wobei die wenigstens eine Flüssigkeit und/oder das zumindest eine flüssige Härtungs- oder Vernetzungsmittel mit einem Gas vermischt ist bzw. sind.

Ausführungsformen der Erfindung werden anhand der Figuren diskutiert. Es zeigen:
- Fig. 1a bis 1c: ein Ausführungsbeispiel einer erfindungsgemäßen Mischvorrichtung mit unterschiedlichen Varianten in Detailansichten,
- Fig. 2: ein Ausführungsbeispiel einer nicht erfindungsgemäßen Mischvorrichtung,
- Fig. 3a und 3b: einen Rührer mit Darstellung von auf den Rührer einwirkenden Kräften,
- Fig. 4 und 5: Detailansichten von weiteren Ausführungsbeispielen von vorgeschlagenen Mischvorrichtungen.

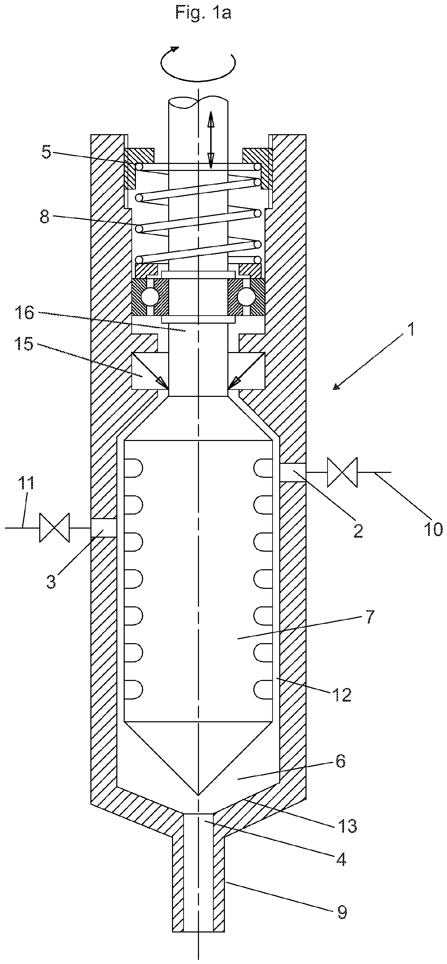

Fig. 1a zeigt eine Mischvorrichtung 1 mit einer Mischkammer 12. Es sind eine Zuführöffnung 2 für wenigstens eine mit Gas vermischte viskose Flüssigkeit (z.B. Polyol mit Luft gemischt) und eine weitere Zuführöffnung 3 für zumindest ein flüssiges Härtungs- oder Vernetzungsmittel (z.B. Isocyanat) ersichtlich, die in die Mischkammer 12 führen. In diesem Ausführungsbeispiel ist die Mischvorrichtung 1 dynamisch ausgebildet und umfasst einen Rührer 7, der in der Mischkammer 12 rotierbar ist. Anders als beschrieben kann zusätzlich zur Flüssigkeit oder anstatt der Flüssigkeit das flüssige Härtungs- oder Vernetzungsmittel mit einem Gas - z.B. Luft - gemischt sein.

Benachbart zur Spitze des Rührers 7 ist eine Ausbringöffnung 4 vorgesehen, durch welche die in der Mischkammer 12 erzeugte Mischung aus der wenigstens einen mit Gas vermischten viskosen Flüssigkeit und dem flüssigen Härtungs- oder Vernetzungsmittel in Richtung einer Düse 9 ausbringbar ist.

Im vorliegenden Ausführungsbeispiel sind die Druckverhältnisse so gewählt, dass es hinter der Ausbringöffnung 4 zu einem Absinken des Druckes der Mischung aus der wenigstens einen mit Gas vermischten viskosen Flüssigkeit und dem flüssigen Härtungs- oder Vernetzungsmittel unter jenen Druck kommt, bei dem es zum Ausschäumen des Gases in der Mischung kommt, sodass es durch ein Ausgasen des Gases zu einer Expansion und damit zu einem Schäumen der Mischung kommt (physikalisches Schäumen).

Die Druckhaltevorrichtung ist in diesem Beispiel gebildet durch den über einen Kraftspeicher 8 beaufschlagten Rührer 7, der durch einen Spalt 6 beabstandet von der Ausbringöffnung 4 angeordnet ist.

Zum Erzeugen der Mischung aus der wenigstens einen mit Gas vermischten viskosen Flüssigkeit und dem flüssigen Härtungs- oder Vernetzungsmittel werden die mit Gas vermischte viskose Flüssigkeit, die von einer Quelle 10 bereitgestellt wird, durch die erste Zuführöffnung 2 und das flüssige Härtungs- oder Vernetzungsmittel, das von einer weiteren Quelle 11 bereitgestellt wird, durch die zweite Zuführöffnung 3 an unterschiedlichen axialen Positionen der hier längserstreckt ausgebildeten Mischvorrichtung 1 eingebracht. Durch den rotierenden Rührer 7 kommt es zum Vermischen dieser beiden Komponenten.

In der hier gezeigten, bevorzugten Ausführungsform ist der Kraftspeicher 8 in Form einer Feder vorgesehen, die den Rührer 7 so lange gegen eine die Ausbringöffnung 4 aufweisende Stirnfläche 13 der Mischkammer 12 drückt, bis durch das über die Quellen 10 und 11 eingebrachte Material genügend Kraft auf den Rührer 7 aufgebracht wird, sodass sich dieser von der Stirnfläche 13 wegbewegt und sich dadurch ein Spalt 6 (hier Ringspalt) zwischen der Stirnfläche 13 und dem Rührer 7 bildet, wodurch die in der Mischkammer 12 hergestellte Mischung aus der Ausbringöffnung 4 austreten kann. Die vom Kraftspeicher 8 in Richtung der Ausbringöffnung 4 aufgebrachte Kraft ist so bemessen, dass sich durch den Rückstau der Materialmischung im Bereich des Spaltes 6 ein über die Mischkammer 12 ausbreitender Druck ergibt, der ein Ausgasen des Gases aus dem Gemisch des Gases mit der viskosen Flüssigkeit verhindert.

Kommt es zu Fluktuationen im Rückstau (z.B. infolge variierender Ausbringmenge, schwankender Viskosität der Mischung, Temperaturschwankungen, Füllstoffen in der Mischung usw.), kommt es zu einem selbsttätigen Anpassen der Position des Rührers 7 relativ zur Ausbringöffnung 4, sodass der Druck in der Mischkammer 12 im Wesentlichen konstant gehalten wird. Eine Dichtung 15 (die hier nur in einer Richtung wirkend gezeigt ist, jedoch auch in beide Richtungen dichtend wirken kann) umschließt dichtend die rotierende Welle 16 des Rührers 7 und dichtet die Mischkammer 12 im Bereich der Welle 16 des Rührers 7 ab. Die Dichtung 15 kann beispielsweise aus Teflon bestehen und eine leichtgängige axiale Bewegung der rotierenden Welle 16 ermöglichen. Dadurch, dass die Welle 16 rotiert und die Dichtung 15 eine geringe Reibung verursacht, kann eine sehr feine axiale Positionsanpassung des Rührers 7 erzielt werden. Insbesondere können dadurch ungewünschte Druckschwankungen durch ruckartigen axialen Versatz des Rührers 7 infolge eines Stick-Slip-Effekts vermieden werden. Durch die Rotation der Welle 16 wird auch das axiale Verschieben des Rührers 7 erleichtert. Vorzugsweise ist die Dichtung 15 als Rotations- und Translationsdichtung ausgebildet.

Die Vorspannung des Kraftspeichers 8 kann im gezeigten Ausführungsbeispiel eingestellt werden. In diesem Beispiel ist dafür eine als Anschlag für die Feder ausgebildete Einstellvorrichtung 5 in Form einer Schraubhülse vorgesehen, die durch eine Drehbewegung axial verstellbar ist.

Anders als dargestellt ist auch ein nicht erfindungsgemäßes Ausführungsbeispiel denkbar, bei dem kein Kraftspeicher 8 vorgesehen ist und der Spalt 6 zwischen der Ausbringöffnung 4 und dem Rührer 7 fix eingestellt wird. Bei diesem Ausführungsbeispiel kann nicht auf Fluktuationen im Rückstau reagiert werden. Ein weiteres, nicht dargestelltes Ausführungsbeispiel könnte so aussehen, dass zwar ein Kraftspeicher 8 vorgesehen ist, dieser aber konstruktiv auf ein vorbestimmtes Maß vorgespannt ist. Auch hier kann keine Veränderung erfolgen.

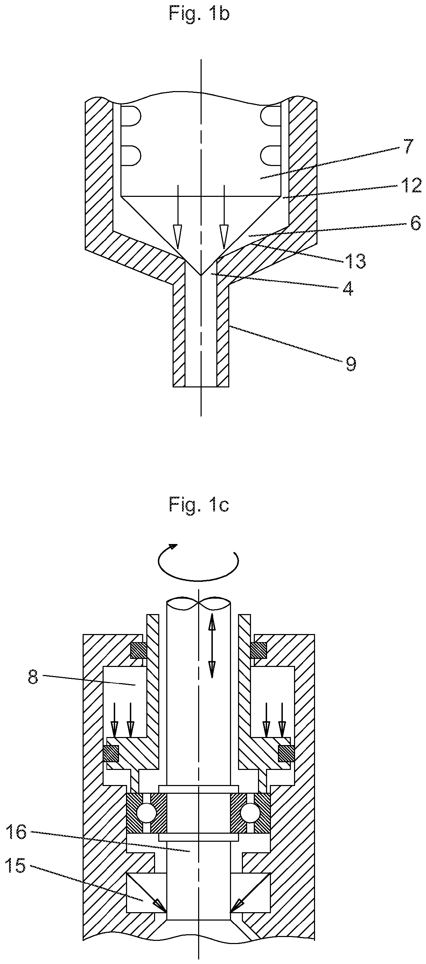

Fig. 1b zeigt eine Detailansicht der Spitze des Rührers 7, die in diesem Beispiel spitzer als die Neigung der Stirnfläche 13 der Mischkammer 12 ausgebildet ist. Dadurch liegt die Spitze des Rührers 7 nur ringförmig an der Stirnfläche 13 an und ragt in die Ausbringöffnung 4 hinein, um diese ringförmig abzuschließen.

Fig. 1c zeigt eine Variante des Ausführungsbeispiels, bei dem der Kraftspeicher 8 als Druckluftfeder ausgebildet ist. Weiters ist auch eine Variante denkbar, bei der der Kraftspeicher 8 als hydraulische Kolben-Zylinder-Einheit ausgebildet ist.

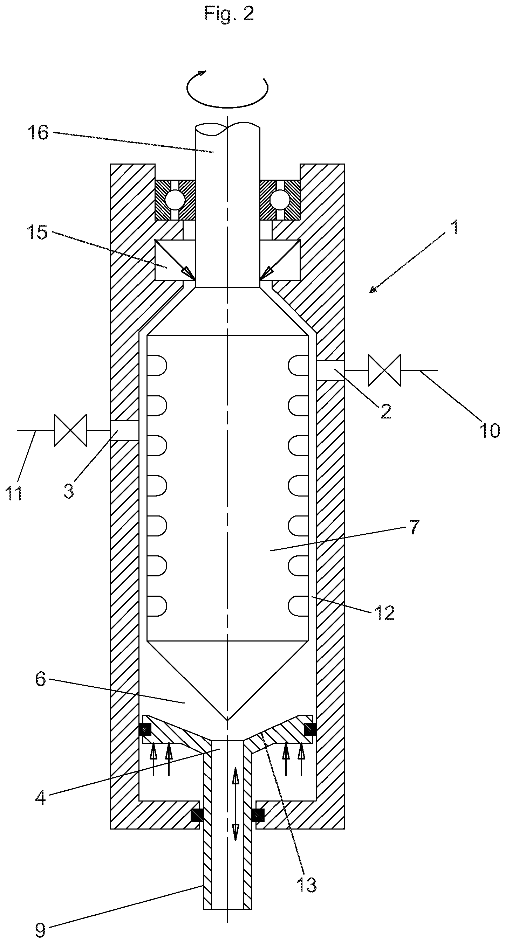

Im Unterschied zu Fig. 1a bis 1c zeigt Fig. 2 ein nicht erfindungsgemäßes Ausführungsbeispiel, bei dem nicht der Rührer 7 in der Mischkammer 12 verfahrbar angeordnet ist, sondern die Stirnwand der Mischkammer 12, in deren Stirnfläche 13 die Ausbringöffnung 4 angeordnet ist, relativ zum Rührer 7 verfahrbar ist, um wiederum den Spalt 6 zwischen Ausbringöffnung 4 und Rührer 7 einzustellen.

All jene Varianten, die für das Ausführungsbeispiel gemäß Fig. 1a gezeigt wurden, sind auch für das Ausführungsbeispiel gemäß Fig. 2 möglich.

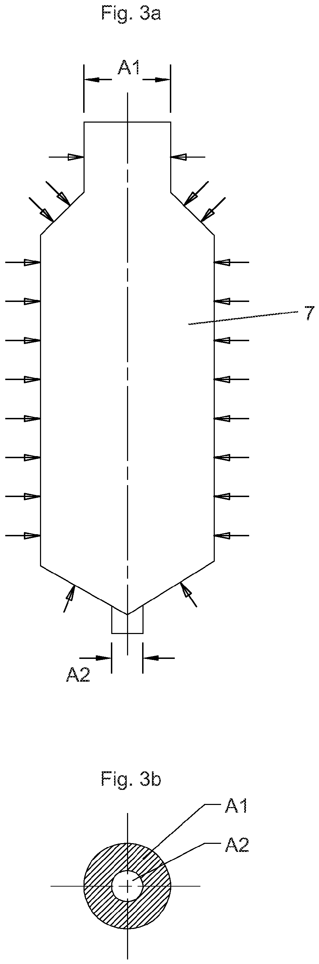

Fig. 3a zeigt einen Rührer 7. Die von dem in der Mischkammer 12 eingebrachten Material auf den Rührer 7 ausgeübten Kräfte (dargestellt durch auf den Rührer 7 weisende Pfeile) mitteln sich bis auf die Bereiche A1 (abgedichteter Bereich des Rührers 7) und A2 (im Wesentlichen druckloser Bereich, durch den das Material aus der Ausbringöffnung 4 ausbringbar ist) weg. Es entsteht ein Druck in der Mischkammer 12, welcher der durch die vom Kraftspeicher 8 ausgeübten Kraft dividiert durch die Differenz dieser zwei Flächen A1 und A2 (siehe Fig. 3b) weitestgehend entspricht.

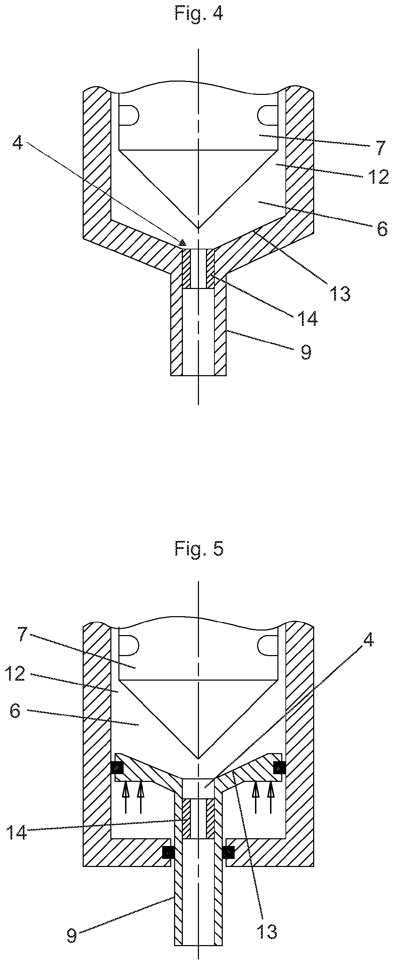

Fig. 4 zeigt ein weiteres Beispiel einer Druckhaltevorrichtung für eine Mischvorrichtung 1 gemäß Fig. 1a und Fig. 5 zeigt ein weiteres Beispiel einer Druckhaltevorrichtung für eine Mischvorrichtung 1 gemäß Fig. 2. In beiden Fällen ist die Druckhaltevorrichtung durch eine Blende 14 und einen Rührer 7, der durch einen Spalt 6 beabstandet von der Ausbringöffnung 4 angeordnet ist, gebildet. Der durch diese Druckhaltevorrichtungen vorgebbare Druck kann jeweils durch die im Bereich der Ausbringöffnung 4 angeordnete Blende 14 erzeugt werden. Die für den gewünschten Druck erforderliche Dimensionierung der Blende 14 kann durch Versuche oder Berechnungen festgestellt werden. Dies ermöglicht einen besonders einfachen Aufbau der Druckhaltevorrichtung, bei dem insbesondere auf eine Einstellvorrichtung 5 verzichtet werden kann.

### Bezugszeichenliste:

- 1: Mischvorrichtung
- 2: Zuführöffnung für wenigstens eine mit Gas vermischte viskose Flüssigkeit
- 3: weitere Zuführöffnung für zumindest ein flüssiges Härtungs- oder Vernetzungsmittel
- 4: Ausbringöffnung
- 5: Einstellvorrichtung
- 6: Spalt
- 7: Rührer
- 8: Kraftspeicher
- 9: Düse
- 10: Quelle für wenigstens eine mit Gas vermischte viskose Flüssigkeit
- 11: Quelle für zumindest ein flüssiges Härtungs- oder Vernetzungsmittel
- 12: Mischkammer
- 13: Stirnfläche
- 14: Blende
- 15: Dichtung
- 16: Welle

## Patentansprüche

1. Mischvorrichtung (1) mit wenigstens einer Zuführöffnung (2) für wenigstens eine Flüssigkeit und mit zumindest einer weiteren Zuführöffnung (3) für zumindest ein flüssiges Härtungs- oder Vernetzungsmittel, wobei die Flüssigkeit und/oder das flüssige Härtungs- oder Vernetzungsmittel mit einem Gas vermischt ist bzw. sind, und einer Ausbringöffnung (4) zum Ausbringen einer in der Mischvorrichtung herstellbaren Mischung aus der wenigstens einen Flüssigkeit und dem zumindest einen flüssigen Härtungs- oder Vernetzungsmittel, wobei eine Druckhaltevorrichtung zum Halten eines vorgebbaren Druckes größer als jener Druck, bei dem es zu einem Ausschäumen des Gases in der Mischvorrichtung (1) kommt, vorgesehen ist, wobei die Druckhaltevorrichtung ein in der Mischvorrichtung (1) relativ zur Ausbringöffnung (4) verfahrbar angeordnetes Stellglied umfasst, durch welches ein zwischen dem Stellglied und der Ausbringöffnung (4) verbleibender Spalt (6) einstellbar ist, **dadurch gekennzeichnet, dass** die Mischvorrichtung (1) einen rotierenden Rührer (7) zum Vermischen der wenigstens einen Flüssigkeit und des zumindest einen flüssigen Härtungs- oder Vernetzungsmittels aufweist, wobei der Rührer (7) verfahrbar ausgebildet ist und das Stellglied bildet, wobei das verfahrbare Stellglied durch einen Kraftspeicher (8) in Richtung der Ausbringöffnung (4) vorgespannt ist.

2. Mischvorrichtung nach Anspruch 1, wobei der durch die Druckhaltevorrichtung vorgebbare Druck mittels einer Einstellvorrichtung (5) veränderbar, vorzugsweise in Stufen oder stufenlos einstellbar, ist.

3. Mischvorrichtung nach Anspruch 1 oder 2, wobei die Druckhaltevorrichtung eine im Bereich der Ausbringöffnung (4) angeordnete Blende (14) oder ein den zugänglichen Bereich der Ausbringöffnung (4) auf einen Spalt begrenzendes festes Gegenmittel umfasst.

4. Mischvorrichtung nach wenigstens einem der Ansprüche 1 bis 3, wobei eine Vorrichtung zum Einstellen der Stärke des Kraftspeichers (8) vorgesehen ist.

5. Mischvorrichtung nach wenigstens einem der Ansprüche 1 bis 4, wobei die Ausbringöffnung (4) relativ zu einem axial feststehenden Mittel, vorzugsweise einem Rührer (7), zur Einstellung des zwischen der Ausbringöffnung (4) und dem axial feststehenden Mittel verbleibenden Spaltes verfahrbar ist.

6. Mischvorrichtung nach Anspruch 5, wobei die Druckhaltevorrichtung das axial feststehende Mittel und die relativ zum axial feststehenden Mittel verfahrbare Ausbringöffnung (4) umfasst.

7. Mischvorrichtung nach wenigstens einem der Ansprüche 1 bis 6, wobei die Mischvorrichtung (1) längserstreckt ausgebildet ist und die wenigstens eine Zuführöffnung (2) für die wenigstens eine Flüssigkeit und die zumindest eine weitere Zuführöffnung (3) für das zumindest ein flüssiges Härtungs- oder Vernetzungsmittel an unterschiedlichen axialen Positionen der Mischvorrichtung (1) angeordnet sind.

8. Mischvorrichtung nach wenigstens einem der Ansprüche 1 bis 7, wobei die Ausbringöffnung (4) der Mischvorrichtung (1) mit einer Düse (9) verbunden ist.

9. Mischvorrichtung nach wenigstens einem der Ansprüche 1 bis 8, wobei eine Dichtung (15) zum dichtenden Abschließen einer Mischkammer (12) der Mischvorrichtung (1) im Bereich einer Welle (16) eines Rührers (7), wobei die Dichtung (15) vorzugsweise als Rotations- und Translationsdichtung ausgebildet ist.

10. Anordnung mit einer Mischvorrichtung (1) nach wenigstens einem der Ansprüche 1 bis 9 und
- einer Quelle (10) für wenigstens eine Flüssigkeit, die mit der wenigstens einen Zuführöffnung (2) für die wenigstens eine Flüssigkeit verbunden ist, und
- einer Quelle (11) für zumindest ein flüssiges Härtungs- oder Vernetzungsmittel, die mit der zumindest einen weiteren Zuführöffnung (3) für das zumindest ein flüssiges Härtungs- oder Vernetzungsmittel verbunden ist,
wobei die wenigstens eine Flüssigkeit und/oder das zumindest eine flüssige Härtungs- oder Vernetzungsmittel mit einem Gas vermischt ist bzw. sind.

11. Verfahren zum Herstellen eines geschäumten Materials, wobei wenigstens eine Flüssigkeit mit zumindest einem flüssigen Härtungs- oder Vernetzungsmittel - wobei die Flüssigkeit und/oder das flüssige Härtungs- oder Vernetzungsmittel mit einem Gas vermischt ist bzw. sind - in einer Mischvorrichtung (1) nach wenigstens einem der Ansprüche 1 bis 9 vermischt wird und anschließend durch eine Ausbringöffnung (4) der Mischvorrichtung (1) ausgebracht und bei oder nach der Ausbringung expandiert wird, **dadurch gekennzeichnet, dass** die wenigstens eine Flüssigkeit und das zumindest eine flüssige Härtungs- oder Vernetzungsmittel in der Mischvorrichtung (1) bei einem Druck vermischt werden, bei welchem ein Entgasen des Gases aus der wenigstens einen Flüssigkeit und/oder aus dem flüssigen Härtungs- oder Vernetzungsmittel vermieden wird und dieser Druck in der Mischvorrichtung (1) zumindest bis zur Ausbringung in der Ausbringöffnung (4) aufrecht erhalten wird.

12. Verfahren nach Anspruch 11, wobei das Mischen in Intervallen erfolgt und die Ausbringöffnung (4) zwischen den Intervallen geschlossen wird.

## Claims

1. A mixing device (1) comprising at least one feed opening (2) for at least one liquid and comprising at least one further feed opening (3) for at least one liquid curing or crosslinking agent, the liquid and/or the liquid curing or crosslinking agent being mixed with a gas, and a discharge opening (4) for discharging a mixture of the at least one liquid and the at least one liquid curing or crosslinking agent that can be produced in the mixing device, a pressure-maintaining device being provided for maintaining a predeterminable pressure that is greater than the pressure at which the gas in the mixing device (1) is foamed, the pressure-maintaining device comprising an actuator arranged in the mixing device (1) so as to be movable relative to the discharge opening (4), by means of which actuator a gap (6) remaining between the actuator and the discharge opening (4) can be adjusted, **characterized in that** the mixing device (1) comprises a rotating stirrer (7) for mixing the at least one liquid and the at least one liquid curing or crosslinking agent, the stirrer (7) being movable and forming the actuator, the movable actuator being preloaded by an energy accumulator (8) in the direction of the discharge opening (4).

2. The mixing device according to claim 1, wherein the pressure which can be predetermined by the pressure-maintaining device can be changed by means of an adjustment device (5), preferably can be adjusted in steps or continuously.

3. The mixing device according to claim 1 or 2, wherein the pressure-maintaining device comprises an aperture (14) arranged in the region of the discharge opening (4) or a fixed counter means limiting the accessible region of the discharge opening (4) to a gap.

4. The mixing device according to at least one of claims 1 to 3, wherein a device for adjusting the strength of the energy accumulator (8) is provided.

5. The mixing device according to at least one of claims 1 to 4, wherein the discharge opening (4) is movable relative to an axially fixed means, preferably a stirrer (7), for adjusting the gap remaining between the discharge opening (4) and the axially fixed means.

6. The mixing device according to claim 5, wherein the pressure-maintaining device comprises the axially fixed means and the discharge opening (4) which is movable relative to the axially fixed means.

7. The mixing device according to at least one of claims 1 to 6, wherein the mixing device (1) is elongate and the at least one feed opening (2) for the at least one liquid and the at least one further feed opening (3) for the at least one liquid curing or crosslinking agent are arranged at different axial positions of the mixing device (1).

8. The mixing device according to at least one of claims 1 to 7, wherein the discharge opening (4) of the mixing device (1) is connected to a nozzle (9).

9. The mixing device according to at least one of claims 1 to 8, wherein a seal (15) for sealingly sealing a mixing chamber (12) of the mixing device (1) in the region of a shaft (16) of a stirrer (7), wherein the seal (15) is preferably in the form of a rotational and translational seal.

10. An arrangement having a mixing device (1) according to at least one of claims 1 to 9 and
- a source (10) for at least one liquid, which source is connected to the at least one feed opening (2) for the at least one liquid, and
- a source (11) for at least one liquid curing or crosslinking agent, which source is connected to the at least one further feed opening (3) for the at least one liquid curing or crosslinking agent,
wherein the at least one liquid and/or the at least one liquid curing or crosslinking agent is or are mixed with a gas.

11. A method for producing a foamed material, at least one liquid being mixed with at least one liquid curing or crosslinking agent, the liquid and/or the liquid curing or crosslinking agent being mixed with a gas, in a mixing device (1) according to at least one of claims 1 to 9 and subsequently discharged through a discharge opening (4) of the mixing device (1) and expanded during or after the discharge process, **characterized in that** the at least one liquid and the at least one liquid curing or crosslinking agent are mixed in the mixing device (1) at a pressure at which degassing of the gas from the at least one liquid and/or from the liquid curing or crosslinking agent is prevented and this pressure in the mixing device (1) is maintained at least until the discharge process into the discharge opening (4).

12. The method according to claim 11, wherein the mixing takes place at intervals and the discharge opening (4) is closed between the intervals.

## Revendications

1. Dispositif de mélange (1) comportant au moins une ouverture d'alimentation (2) pour au moins un liquide et comportant au moins une autre ouverture d'alimentation (3) pour au moins un agent liquide de durcissement ou de réticulation, le liquide et/ou l'agent liquide de durcissement ou de réticulation étant mélangé(s) avec un gaz, et une ouverture d'évacuation (4) destinée à évacuer un mélange de l'au moins un liquide et de l'au moins un agent liquide de durcissement ou de réticulation, lequel mélange peut être produit dans le dispositif de mélange, un dispositif de maintien de pression étant prévu pour maintenir une pression prédéterminable à une valeur supérieure à la pression à laquelle le moussage du gaz dans le dispositif de mélange (1) se produit, le dispositif de maintien de pression comprenant un actionneur disposé dans le dispositif de mélange (1) de manière à être mobile par rapport à l'ouverture d'évacuation (4), lequel actionneur permettant de régler un espace (6) subsistant entre l'actionneur et l'ouverture d'évacuation (4), **caractérisé en ce que** le dispositif de mélange (1) présente un agitateur rotatif (7) destiné à mélanger l'au moins un liquide et l'au moins un agent liquide de durcissement ou de réticulation, l'agitateur (7) étant conçu de manière à être mobile et formant l'actionneur, l'actionneur mobile étant précontraint par un accumulateur d'énergie (8) en direction de l'ouverture d'évacuation (4).

2. Dispositif de mélange selon la revendication 1, dans lequel la pression déterminable par le dispositif de maintien de pression est modifiable au moyen d'un dispositif de réglage (5), de préférence réglable par paliers ou en continu.

3. Dispositif de mélange selon la revendication 1 ou 2, dans lequel le dispositif de maintien de pression comprend un diaphragme (14) disposé dans la région de l'ouverture d'évacuation (4) ou un moyen complémentaire fixe limitant la région accessible de l'ouverture d'évacuation (4) par un espace.

4. Dispositif de mélange selon au moins l'une des revendications 1 à 3, dans lequel un dispositif est prévu pour régler la force de l'accumulateur d'énergie (8).

5. Dispositif de mélange selon au moins l'une des revendications 1 à 4, dans lequel l'ouverture d'évacuation (4) est mobile par rapport à un moyen fixe axialement, de préférence un agitateur (7), pour régler l'espace subsistant entre l'ouverture d'évacuation (4) et le moyen fixe axialement.

6. Dispositif de mélange selon la revendication 5, dans lequel le dispositif de maintien de pression comprend le moyen fixe axialement et l'ouverture d'évacuation (4) qui est mobile par rapport au moyen fixe axialement.

7. Dispositif de mélange selon au moins l'une des revendications 1 à 6, dans lequel le dispositif de mélange (1) est conçu de manière allongée, et l'au moins une ouverture d'alimentation (2) pour l'au moins un liquide et l'au moins une autre ouverture d'alimentation (3) pour l'au moins un agent liquide de durcissement ou de réticulation sont disposées à différentes positions axiales du dispositif de mélange (1).

8. Dispositif de mélange selon au moins l'une des revendications 1 à 7, dans lequel l'ouverture d'évacuation (4) du dispositif de mélange (1) est reliée à une buse (9).

9. Dispositif de mélange selon au moins l'une des revendications 1 à 8, dans lequel un joint (15) est prévu pour sceller de manière étanche une chambre de mélange (12) du dispositif de mélange (1) dans la région d'un arbre (16) d'un agitateur (7), le joint (15) étant de préférence conçu sous la forme d'un joint rotatif et translationnel.

10. Agencement comportant un dispositif de mélange (1) selon au moins l'une des revendications 1 à 9 et
- une source (10) pour au moins un liquide, laquelle est reliée à l'au moins une ouverture d'alimentation (2) pour l'au moins un liquide, et
- une source (11) pour au moins un agent liquide de durcissement ou de réticulation, laquelle est reliée à l'au moins une autre ouverture d'alimentation (3) pour l'au moins un agent liquide de durcissement ou de réticulation,
l'au moins un liquide et/ou l'au moins un agent liquide de durcissement ou de réticulation étant mélangé(s) avec un gaz.

11. Procédé de production d'un matériau en mousse, dans lequel au moins un liquide est mélangé avec au moins un agent liquide de durcissement ou de réticulation - le liquide et/ou l'agent liquide de durcissement ou de réticulation étant mélangé(s) avec un gaz - dans un dispositif de mélange (1) selon au moins l'une des revendications 1 à 9, puis est évacué par une ouverture d'évacuation (4) du dispositif de mélange (1) et est expansé pendant ou après l'évacuation, **caractérisé en ce que** l'au moins un liquide et l'au moins un agent liquide de durcissement ou de réticulation sont mélangés dans le dispositif de mélange (1) à une pression à laquelle un dégazage du gaz de l'au moins un liquide et/ou de l'agent liquide de durcissement ou de réticulation est évité, et **en ce que** cette pression est maintenue dans le dispositif de mélange (1) au moins jusqu'à l'évacuation dans l'ouverture d'évacuation (4).

12. Procédé selon la revendication 11, dans lequel le mélange se produit à intervalles, et l'ouverture d'évacuation (4) est fermée entre les intervalles.
